(19) Europäisches Patentamt / European Patent Office / Office européen des brevets

(11) **EP 2 094 620 B1**

(12) **FASCICULE DE BREVET EUROPEEN**

(45) Date de publication et mention
de la délivrance du brevet:
**06.03.2013 Bulletin 2013/10**

(51) Int Cl.:
***C04B 35/482*** *(2006.01)*

(21) Numéro de dépôt: **07872001.8**

(22) Date de dépôt: **20.12.2007**

(86) Numéro de dépôt international:
**PCT/FR2007/052590**

(87) Numéro de publication internationale:
**WO 2008/084175 (17.07.2008 Gazette 2008/29)**

(54) **PRODUIT FRITTE DOPE A BASE DE ZIRCON ET DE ZIRCONE**

DOTIERTES UND GESINTERTES PRODUKT AUF DER BASIS VON ZIRKON UND ZIRKONIUM

DOPED SINTERED PRODUCED BASED ON ZIRCON AND ZIRCONIA

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **21.12.2006 FR 0655804**

(43) Date de publication de la demande:
**02.09.2009 Bulletin 2009/36**

(73) Titulaire: **Saint-Gobain Centre de Recherches et
d'Etudes
Européen
92400 Courbevoie (FR)**

(72) Inventeurs:
• **CITTI, Olivier
F-84000 Avignon (FR)**

• **FOURCADE, Julien
Shrewsbury, Massachusetts 01545 (US)**
• **GAUBIL, Michel
F-30133 Les Angles (FR)**
• **MC GARRY, Charles Nicholas
Buckhannon, West Virginia 26201 (US)**
• **SEABORNE, Michael J.
Hubbardston, Massachusetts 01452 (US)**

(74) Mandataire: **Tanty, François
Cabinet Nony
3, rue de Penthièvre
75008 Paris (FR)**

(56) Documents cités:
**EP-A2- 0 199 459      EP-A2- 0 388 747
WO-A-2006/108945    GB-A- 1 236 286
US-A- 5 122 317**

EP 2 094 620 B1

**Description**

L'invention concerne de nouveaux produits frittés élaborés à partir de zircon et de zircone, un procédé pour leur fabrication et leur utilisation, notamment en four de verrerie.

Parmi les produits réfractaires, on distingue les produits fondus et coulés et les produits frittés.

A la différence des produits frittés, les produits fondus et coulés comportent le plus souvent une phase vitreuse intergranulaire très abondante qui vient remplir le réseau des grains cristallisés. Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas a *priori* utilisable telle quelle pour fabriquer un produit fritté et réciproquement.

Les produits frittés sont obtenus par mélange de matières premières appropriées puis mise en forme à cru de ce mélange et cuisson de la forme crue résultante à une température et pendant un temps suffisants pour obtenir le frittage de cette forme crue.

Les produits frittés, selon leur composition chimique, sont destinés à des industries très variées.

Un produit fritté adapté à une application particulière ne possédera donc pas a *priori* les propriétés nécessaires pour être utilisé dans une autre application où les conditions de température, de corrosion ou d'abrasion sont différentes.

Par exemple US 3,899,341 décrit des produits frittés élaborés à partir de zircon (50-90%) et de zircone. La zircone est partiellement stabilisée afin de limiter les déformations élastiques des produits, qui conduisent à des fissurations. Les produits de US 3,899,341 sont cependant conçus pour être utilisés en contact avec de l'acier fondu. Ils ne sont donc pas, a *priori,* aptes à être utilisés en contact avec un verre fondu.

Les propriétés des produits élaborés à partir de zircon, de zircone ou d'un mélange de ces deux matières premières sont généralement très différentes, notamment en ce qui concerne la résistivité électrique et la résistance à la corrosion. De manière générale, on ne saurait déduire de l'enseignement d'un document traitant d'un matériau élaboré à partir de zircone, par exemple US 4 507 394, ou à partir de zircon, un enseignement directement exploitable pour la fabrication d'un matériau multiphasé élaboré à partir de zircone et de zircon.

Les produits denses élaborés à partir de zircon (silicate de zirconium : $ZrO_2.SiO_2$, ou $ZrSiO_4$) et éventuellement de zircone (oxyde de zirconium : $ZrO_2$) peuvent être utilisés dans des applications où ils sont directement au contact de verre fondu, en particulier de verres non alcalins fondus :

US 5,124,287 décrit des produits contenant de 75 à 95% de zircon et de l'oxyde de titane, destinés à être en contact avec du verre fondu. La présence d'oxyde de titane est considérée comme favorable à la densification des produits obtenus après frittage. Dans le produit final, la zircone doit être non stabilisée et il est donc préférable d'utiliser de la zircone non stabilisée dans le mélange de départ.

WO 2006/073841 décrit des matériaux réfractaires destinés à l'industrie verrière. Ces matériaux, à base de zircon, peuvent comporter $Y_2O_3$. Ils comportent toujours au moins 1 % de $P_2O_5$ ou de $V_2O_5$.

Le brevet US 6,121,177 de la Société Européenne des Produits Réfractaires décrit des produits frittés à base de zircon et de zircone présentant une résistance à la corrosion par le verre améliorée, avec la possibilité de fabriquer des gros blocs sans fissure, présentant un comportement dilatométrique permettant la fermeture des joints entre les blocs à la température de fonctionnement des fours, et d'un coût limité. Ces produits frittés sont élaborés à partir d'une charge de départ contenant 5 à 40% de zircon et de zircone. Ils présentent une teneur en zircone comprise entre 82 et 96%. Ils contiennent également de l'alumine (0,2 à 2,5%), de l'oxyde d'yttrium (0,4 à 5 %) et de l'oxyde de titane (0,2-3%).

EP 0 199 459 décrit un produit fritté obtenu à partir d'une charge de départ contenant un « alliage céramique » à base de zircone incorporant un agent durcissant pouvant être en particulier $YNbO_4$ et/ou $YTaO_4$.

Dans une application particulière, le bloc réfractaire, appelé « bloc porte-électrode », sert de support à une électrode d'un four électrique destiné à la fusion de verre. Il doit alors non seulement résister efficacement à la corrosion par le verre fondu, avec lequel il entre en contact, mais aussi présenter une grande résistivité électrique aux températures d'utilisation, généralement comprises entre 1450°C et 1500°C, afin de réduire la quantité de courant électrique de fuite. On évite ainsi une dégradation rapide du matériau réfractaire à proximité de l'électrode, et en particulier du matériau réfractaire constituant le bloc porte-électrode.

L'actuel développement des verres de très haute qualité, nécessitant des températures de fusion élevées, et donc des énergies électriques de plus en plus importantes, augmente les exigences pour les produits réfractaires des fours de verrerie et notamment pour les produits utilisés en blocs porte-électrodes. Il existe donc un besoin pour un nouveau produit réfractaire présentant une résistivité électrique élevée, notamment à des températures d'environ 1500°C, et une bonne résistance à la corrosion par le verre fondu.

La présente invention vise à satisfaire ce besoin.

A cet effet, l'invention propose un produit fritté selon la revendication 1.

Comme on le verra plus en détail dans la description qui va suivre, la présence dans le produit selon l'invention d'un dopant choisi dans le groupe formé par $V_2O_5$, $Nb_2O_5$, $Ta_2O_5$, et leurs mélanges améliore la résistivité électrique, sans dégrader de manière rédhibitoire la résistance à la corrosion par le verre fondu.

Par ailleurs, les inventeurs ont mis en évidence, dans les produits multiphasés zircon-zircone de la présente invention, un intérêt particulier à la présence, en plus du dopant, d'au moins 0,4% d'un stabilisant de la zircone choisi parmi $Y_2O_3$, MgO, CaO, $CeO_2$, et leurs mélanges, pourvu que le rapport molaire D/S entre la teneur totale D en dopant et la teneur totale S en stabilisant soit tel que $0,7 \leq D/S \leq 2$. De préférence, $D/S \leq 1,5$, de préférence $D/S \leq 1,4$, de préférence encore $D/S \leq 1,2$.

Les inventeurs ont en effet découvert, dans les produits multiphasés, une relation entre le rapport molaire dopant/stabilisant (D/S) d'une part et la résistivité électrique et la résistance à la corrosion d'autre part. Le produit selon l'invention présente ainsi, de préférence, un rapport molaire D/S compris entre 0,7 et 2. Le produit réfractaire fritté selon l'invention présente alors un compromis optimal entre la résistivité électrique à une température d'environ 1500°C et la résistance à la corrosion par le verre fondu. Il est alors bien adapté à une application comme bloc électrode, en particulier lorsqu'il est destiné à entrer en contact avec des verres fondus tels que les verres de renforcement (verres E) et les verres électroniques, ces derniers étant destinés notamment à la fabrication des écrans plats de téléviseurs ou d'ordinateurs.

De préférence, le produit selon l'invention présente encore une ou plusieurs des caractéristiques optionnelles suivantes :

- La teneur totale en dopant ($V_2O_5$ + $Nb_2O_5$ + $Ta_2O_5$) est supérieure ou égale à 0,4%, de préférence à 0,8%, de préférence encore à 1%, de préférence toujours à 1,4%, et/ou inférieure ou égale à 6%, de préférence à 2,2%, de préférence toujours à 1,8%, de préférence enfin à 1,5%, en pourcentages en masse sur la base des oxydes.
- La teneur totale en zircone et silice, sous forme libre et sous forme de zircon, est supérieure à 81%, de préférence à 85%, de préférence encore à 86,5%, de préférence à 90%, de préférence toujours, à 95%, en pourcentages en masse sur la base des oxydes.
- La teneur totale en zircone représente au moins 67%, de préférence au moins 70 %, de préférence au moins 75 %, de préférence encore 79 %, voire plus de 82%, et/ou moins de 97%, de préférence moins de 90%, de préférence encore moins de 87%, de préférence toujours moins de 85%, en pourcentages massiques sur la base des oxydes.
- Le dopant est choisi parmi $Nb_2O_5$, $Ta_2O_5$ et leurs mélanges.
- Le dopant préféré est $Nb_2O_5$.
- Ledit rapport molaire D/S est supérieur ou égal à 0,81, de préférence à 0,9, de préférence supérieur à 0,95 et/ou inférieur ou égal à 2, de préférence inférieur ou égal à 1,5, de préférence inférieur ou égal à 1,4, de préférence à 1,2, de préférence encore à 1,1, et, de préférence toujours, à 1,05.
- Les « autres oxydes » comportent encore au moins un promoteur de frittage de préférence choisi dans le groupe formé par $Al_2O_3$ , $TiO_2$, $Cu_2O$, CuO, BeO, NiO, ZnO, $MnO_2$, $Co_2O_3$ et leurs mélanges. De préférence, au moins un promoteur de frittage est choisi dans le groupe formé par $Al_2O_3$, $TiO_2$, BeO, ZnO, $MnO_2$ et leurs mélanges. En effet, $Cu_2O$, CuO, NiO et $Co_2O_3$ ont tendance à colorer le verre quand ils sont en contact avec ce dernier.
- De préférence, la teneur en $Al_2O_3$ est supérieure à 0,2%, de préférence à 0,5 %, et/ou inférieure ou égale à 2,5%, de préférence à 2 %, de préférence à 1,5 %, de préférence encore à 1 %, en pourcentages en masse sur la base des oxydes.
- De préférence, la teneur des autres promoteurs de frittage, de préférence $TiO_2$, est supérieure à 0,2%, de préférence à 0,4 %, et/ou inférieure à 3%, de préférence inférieure à 2 %, de préférence à 1,5 %, en pourcentages en masse sur la base des oxydes.
- La teneur totale en stabilisant ($Y_2O_3$ + MgO + CaO + $CeO_2$) est supérieure ou égale à 0,4%, de préférence à 0,5%, de préférence à 0,8%, de préférence encore à 1 % et/ou inférieure à 6%, de préférence à 4%, de préférence encore à 2,2%, de préférence à 1,8%, de préférence encore à 1,5%, en pourcentages en masse sur la base des oxydes.
- De préférence le stabilisant est choisi parmi $Y_2O_3$, $CeO_2$ et leurs mélanges. $Y_2O_3$ est le stabilisant préféré entre tous.
- Le produit fritté présente une résistivité électrique mesurée à 1500°C à la fréquence de 100 Hz supérieure à 100 Ω.cm.
- Le produit fritté présente un indice de résistance à la corrosion par un verre E, suivant le test défini ci-dessous, supérieur ou égal à 60.
- Le produit fritté se présente sous la forme d'un bloc, présentant de préférence une masse supérieure à 5 Kg, de préférence à 10 Kg.

L'invention concerne également un procédé de fabrication d'un produit fritté comportant les étapes suivantes :

a) mélange de matières premières pour former une charge de départ,
b) mise en forme d'une pièce crue à partir de ladite charge de départ,
c) frittage de ladite pièce crue de manière à obtenir ledit produit fritté,

remarquable en ce que la charge de départ est déterminée de manière que ledit produit soit conforme à l'invention.

De préférence, le procédé selon l'invention présente encore une ou plusieurs des caractéristiques optionnelles suivantes :

- La teneur en zircon dans ladite charge de départ est inférieure ou égale à 45,5%, de préférence à 45%, de préférence à 40%, de préférence à 38 % et/ou supérieure ou égale à 6,4%, de préférence à 15%, de préférence à 27%, de préférence encore à 34 %.
- La charge de départ comporte au moins 40%, de préférence au moins 50%, de préférence encore au moins 55% de zircone ajoutée au zircon, stabilisée ou non, en pourcentages massiques sur la base de la charge de départ sèche. Une teneur en zicone ajoutée d'environ 60% est préférée entre toutes.
- De préférence, on ajoute volontairement, c'est-à-dire systématiquement et méthodiquement, à l'étape a) un ou plusieurs des oxydes parmi $Y_2O_3$, MgO, CaO, $CeO_2$, $V_2O_5$, $Nb_2O_5$, $Ta_2O_5$, leurs précurseurs et leurs mélanges dans des quantités garantissant que le produit fritté obtenu à l'étape e) est conforme à l'invention.

L'invention concerne également un produit fabriqué suivant un procédé selon l'invention.

L'invention concerne encore l'utilisation d'un produit réfractaire selon l'invention, ou fabriqué suivant un procédé selon l'invention, dans un four de verrerie, en particulier dans des zones du four en contact avec du verre fondu, en particulier avec des verres E et/ou des verres plus résistifs que le verre E, et/ou dans des applications où une résistivité électrique supérieure à 100 $\Omega.cm$, de préférence à 150 $\Omega.cm$, de préférence à 200 $\Omega.cm$, mesurée à 1500°C à la fréquence de 100 Hz, est recherchée. L'invention concerne donc notamment une utilisation comme « bloc porte-électrode ».

L'invention concerne également l'utilisation, dans une cuve d'électrolyse, d'un produit réfractaire selon l'invention, ou fabriqué suivant un procédé selon l'invention.

L'invention concerne enfin une cuve d'électrolyse comprenant une pluralité de blocs réfractaires, remarquable en ce qu'au moins un desdits blocs comporte, voire est constitué par, un produit fritté selon l'invention ou un produit fritté fabriqué ou susceptible d'être fabriqué suivant un procédé selon l'invention. Ce bloc peut en particulier être disposé dans une région où ledit produit fritté est susceptible d'entrer en contact avec de la cryolithe fondue. Il peut appartenir à une paroi latérale de la cuve.

D'autres caractéristiques et avantages apparaîtront encore à la lecture de la description détaillée qui va suivre.

Dans la présente description et conformément à l'usage, on appelle « zircone libre » les molécules de zircone $ZrO_2$ qui ne sont pas associées à des molécules de silice $SiO_2$ sous forme de zircon. De même, on appelle « silice libre » les molécules de $SiO_2$ qui ne sont pas associées à des molécules de $ZrO_2$ sous forme de zircon. La dissociation du zircon conduit ainsi à de la zircone libre et à de la silice libre. Mais la zircone libre et la silice libre peuvent également provenir d'autres sources que le zircon. Dans la description qui va suivre, on appelle « zircone ajoutée » et « silice ajoutée » la zircone et la silice ajoutées éventuellement au zircon dans la charge de départ.

La teneur en silice $SiO_2$ du produit selon l'invention correspond ainsi à la teneur totale, dans la charge de départ, de la silice $SiO_2$ du zircon introduit dans cette charge et de la silice ajoutée. Cette teneur est aussi égale à la teneur totale, dans le produit fritté, de la silice associée à de la zircone dans du zircon du produit et de la silice libre.

Par « impuretés », on entend les constituants inévitables, introduits nécessairement avec les matières premières ou résultant de réactions avec ces constituants. Les impuretés ne sont pas des constituants nécessaires, mais seulement tolérés.

Par « précurseur » de dopant ou de stabilisant, on entend un constituant apte à fournir un dopant ou un stabilisant, respectivement, lors de la fabrication d'un produit selon l'invention.

Par « temporaire », on entend « éliminé du produit pendant le frittage ».

On appelle « taille » d'un grain ou d'une particule, la moyenne de sa plus grande dimension dM et de sa plus petite dimension dm : (dM+dm)/2.

Classiquement, on appelle « taille médiane de particules ou de grains » d'un mélange de particules ou d'un ensemble de grains, la taille divisant les particules de ce mélange ou les grains de cet ensemble en première et deuxième populations égales en nombre, ces première et deuxième populations ne comportant que des particules ou grains présentant une taille supérieure, ou inférieure respectivement, à la taille médiane.

Un verre E présente une analyse chimique suivante, selon la norme ASTM D 578 - 05 , *« Standard Specification for Glass Fiber Strands »*, (en pourcentages massiques) :

- $B_2O_3$ : 0 - 10 %
- CaO: 16 - 25 %
- $Al_2O_3$: 12 - 16 %
- $SiO_2$ : 52 - 62 %
- MgO : 0 - 5 %
- Oxydes alcalins : 0 - 2 %

- TiO$_2$ : 0 - 1,5 %
- Fe$_2$O$_3$ : 0,05 - 0,8 %
- Fluor : 0 - 1 %

La composition du produit selon l'invention, déterminée par analyse chimique, ne fournit que les teneurs globales en silice SiO$_2$ et zircone ZrO$_2$, sans distinguer les teneurs correspondantes en zircon.

Sauf mention contraire, tous les pourcentages sont des pourcentages massiques sur la base des oxydes lorsqu'il est fait référence au produit fritté et sur la base de la masse sèche de la charge de départ lorsqu'il est fait référence à cette charge.

Par « comprenant » ou « comportant », il y a lieu de comprendre « comprenant au moins » ou « comportant au moins », sauf mention contraire (par exemple une composition « comportant » un ensemble de constituants, la somme des teneurs desdits constituants étant égale à 100 %, ne comporte bien entendu pas d'autres constituants).

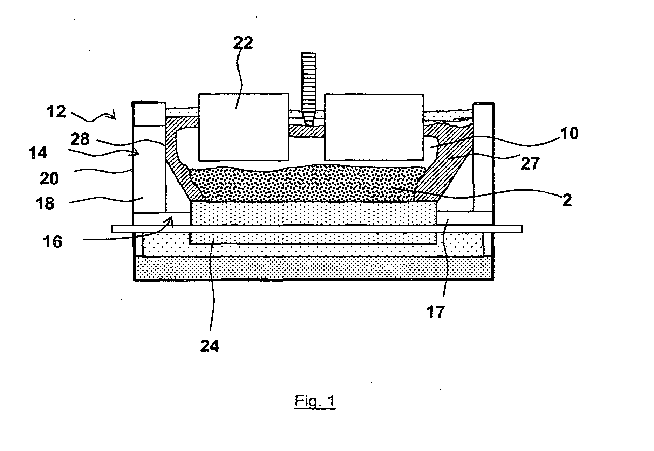

La figure 1 représente schématiquement une cuve d'électrolyse en coupe transversale selon un plan médian.

Pour fabriquer un produit selon l'invention, on peut procéder suivant les étapes a) à c) ci-dessus.

A l'étape a), un mélange de matières premières est préparé pour former une charge de départ.

De préférence, toutes les matières premières utilisées présentent une taille médiane inférieure à 50 $\mu$m.

Selon l'invention, il est indispensable que la charge de départ comporte au moins 5 % (voir exemple 2 ci-dessous), de préférence au moins 15% de zircon, sur la base de la charge de départ sèche. Les propriétés avantageuses du produit selon l'invention ne seraient en effet pas obtenues si les quantités de SiO$_2$ et ZrO$_2$ apportées par le zircon selon l'invention étaient apportées sous forme de silice libre et de zircone libre.

En outre, la charge de départ doit comporter au plus 50 % de zircon, sur la base de la charge de départ sèche. Au delà de cette limite, la résistance à la corrosion ne serait plus satisfaisante.

Le zircon peut être apporté par du sable de zircon ou bien de la chamotte de produits denses à forte teneur en zircon broyée.

De préférence, on détermine la composition de la charge de départ de manière que, dans le produit fritté, le total des teneurs en zircone, sous forme de zircon et de zircone libre, représente au moins 66%, de préférence au moins 70 %, de préférence au moins 75 %, de préférence encore 79 %, voire plus de 82% en pourcentages massiques sur la base des oxydes.

De préférence, la charge de départ comporte au moins 40%, de préférence au moins 50% de zircone ajoutée au zircon, en pourcentages massiques sur la base de la charge de départ sèche. Cette teneur peut même atteindre 80%, voire plus. La zircone dans la charge de départ peut être stabilisée ou non. Elle peut être majoritairement, c'est-à-dire pour plus de 50 % en masse, de structure monoclinique.

Les matières premières contenant de la zircone contiennent également de faibles quantités de HfO$_2$ (en général inférieures à 2 %) et, selon la pratique usuelle, ces deux oxydes ne sont pas distingués l'un de l'autre.

La silice, et la phase vitreuse qu'elle génère, jouent un rôle important pour la faisabilité, notamment pour des blocs de plus de 10 Kg. La phase vitreuse provient de la dissociation du zircon et de la silice éventuellement ajoutée, pouvant être apportée par la zircone utilisée et éventuellement par un ajout volontaire (fumée de silice par exemple, ou verre). La phase vitreuse provenant de la dissociation du zircon est celle préférée entre toutes. De préférence, on n'ajoute pas de silice dans la charge de départ, autrement que sous forme de zircon.

Selon l'invention, la charge de départ contient encore un dopant choisi dans le groupe formé par V$_2$O$_5$, Nb$_2$O$_5$, Ta$_2$O$_5$, leurs précurseurs et les mélanges de ces dopants et/ou de leurs précurseurs. Nb$_2$O$_5$ est le dopant préféré.

Le dopant peut être ajouté sous une forme où il est associé à de la zircone, ou non.

De préférence, le dopant est incorporé dans la charge de départ sous la forme d'une poudre fine, de taille médiane inférieure à 50 $\mu$m. Il en est de même des stabilisants qui ne seraient pas introduits associés à de la zircone.

La charge de départ peut enfin comporter des espèces additionnelles :

- au moins un stabilisant de la zircone ou des précurseurs de tels stabilisants ;
- des agents de frittage et de mise en forme bien connus de l'homme du métier pour les procédés de fabrication par frittage conventionnels, par exemple des agents liants, des plastifiants, des promoteurs de frittage, des défloculants ;
- des impuretés.

On appelle « autres oxydes » toutes ces espèces additionnelles qui ne sont pas temporaires.

Un stabilisant peut être ajouté à la charge de départ indépendamment de la zircone. Cependant, le stabilisant peut aussi être introduit dans la charge de départ, au moins en partie, sous la forme de zircone stabilisée. Le stabilisant peut également être introduit sous la forme d'un précurseur, par exemple sous la forme d'un carbonate de calcium.

Le stabilisant de la zircone est de préférence choisi dans le groupe formé par Y$_2$O$_3$, MgO, CaO, CeO$_2$, et leurs mélanges, en particulier lorsque le produit selon l'invention est destiné à être contact avec du verre en fusion.

Y$_2$O$_3$ et CeO$_2$ sont des stabilisants préférés lorsque le produit réfractaire selon l'invention est susceptible d'entrer en contact avec des vapeurs émises par le verre, MgO et CaO pouvant conduire à des craquelures. $Y_2O_3$ est le stabilisant préféré entre tous.

De préférence, la teneur en stabilisant, de préférence de l'oxyde d'yttrium ($Y_2O_3$), est déterminée de manière que, dans le produit fritté, sa teneur en pourcentage massique sur la base des oxydes dépasse 0,4%.

L'introduction de stabilisant s'effectuant au détriment des autres constituants, l'utilisation de quantités élevées de stabilisant peut conduire à une diminution des propriétés recherchées, notamment de la résistance à la corrosion. Ainsi, la teneur en stabilisant est de préférence déterminée de manière à être, dans le produit fritté, inférieure ou égale à 6 %, de préférence encore à 4%, de préférence à 2,2%, de préférence à 1,8%, de préférence encore à 1,5% en pourcentages massiques sur la base des oxydes.

Le stabilisant peut être introduit sous la forme d'une impureté, notamment du zircon, et/ou sous la forme d'une matière première ajoutée indépendamment des autres matières premières.

La présence de stabilisant est particulièrement avantageuse pour la faisabilité industrielle de blocs pesant plus de 10 kilos.

Lorsqu'au moins un stabilisant de la zircone est introduit dans la charge de départ, la quantité totale de stabilisant est déterminée de manière que le rapport molaire D/S entre la teneur totale en dopant D et la teneur totale en stabilisant S soit tel que, de préférence,

$$0,7 \leq D/S \leq 2.$$

Ce rapport molaire D/S est de préférence supérieur ou égal à 0,81, de préférence à 0,9, de préférence supérieur à 0,95 et/ou inférieur ou égal à 1,5, de préférence à 1,4, de préférence à 1,2, de préférence à 1,1, de préférence à 1,05. On constate qu'en dépit de la teneur parfois élevée en stabilisant, jamais plus de 10% de la zircone du produit fritté n'est stabilisée dans sa forme quadratique et/ou cubique.

Dans un mode de réalisation, la charge de départ comporte un précurseur de dopant et/ou un précurseur de stabilisant choisis de manière à ce qu'au moins 50 %, ou 70 %, 80 %, 90 % en masse, voire sensiblement 100 % du ou de ces précurseurs se décompose(nt) en un dopant et/ou un stabilisant, respectivement, lors de la fabrication du produit.

Dans un mode de réalisation, le dopant n'est pas introduit dans la charge de départ sous une forme où il est associé à un stabilisant de la zircone.

Dans un autre mode de réalisation, le dopant et le stabilisant sont associés dans la charge de départ sous la forme d'un précurseur qui, pour plus de 50 % en masse, ou plus de 70 %, 80 %, 90 %, voire sensiblement 100 % se décompose en ledit dopant et ledit stabilisant lors de la fabrication du produit. Tel n'est pas le cas de $YNbO_4$ par exemple.

Dans un mode de réalisation, la charge de départ comporte moins de 5 % en masse de $YNbO_4$, voire ne comporte pas $YNbO_4$,

Parmi les agents de frittage non temporaires, la charge de départ comporte de préférence au moins un promoteur de frittage choisi dans le groupe formé par $Al_2O_3$, $TiO_2$, $Cu_2O$, $CuO$, $BeO$, $CeO_2$, $NiO$, $ZnO$, $MnO_2$, $Co_2O_3$ et leurs mélanges, de préférence choisi parmi $Al_2O_3$, $TiO_2$, $ZnO$, $MnO_2$, $BeO$, ces promoteurs ne posant avantageusement pas de risque de coloration du verre.

De préférence, la charge de départ est déterminée de manière que la teneur en $Al_2O_3$, dans le produit fritté, soit supérieure à 0,2%, de préférence à 0,5 %, et/ou inférieure ou égale à 2,5%, de préférence à 2 %, de préférence à 1,5 %, de préférence encore à 1%, en pourcentages en masse sur la base des oxydes.

Dans des applications où le produit est destiné à entrer en contact avec du verre en fusion, notamment avec des verres de renforcement, en particulier des verres E, la limite supérieure en $Al_2O_3$ de 2,5% évite avantageusement le risque de lâchers de pierres et donc de défauts critiques dans le verre.

De préférence, la charge de départ est également déterminée de manière que la teneur en $TiO_2$, soit supérieure à 0,2%, de préférence à 0,4 %, et/ou inférieure à 3%, de préférence inférieure à 2 %, de préférence à 1,5 %, en pourcentages en masse sur la base des oxydes. Au-delà de 3% de $TiO_2$ dans le produit fritté, la faisabilité de blocs de plus de 5 Kg se dégrade.

De préférence, on utilise simultanément $Al_2O_3$ et $TiO_2$.

De préférence, la charge de départ est encore déterminée de manière que la teneur en impuretés dans le produit fritté soit inférieure à 1,2%, de préférence à 1%, de préférence encore à 0,7%, de préférence à 0,5%, et de préférence toujours, inférieure à 0,2%, en pourcentages en masse sur la base des oxydes. Les impuretés comprennent en particulier $P_2O_5$ et $Fe_2O_3$.

De préférence, la charge de départ est déterminée de manière que, dans le produit fritté, en pourcentages en masse sur la base des oxydes :

- $P_2O_5 < 1$ %, de préférence $P_2O_5 < 0,9\%$, de préférence $P_2O_5 < 0,5\%$, de préférence $P_2O_5 < 0,3\%$, de préférence

encore $P_2O_5$ < 0,2%, et/ou

- $Fe_2O_3$ < 0,2%, de préférence $Fe_2O_3$ < 0,1 %, de préférence encore $Fe_2O_3$ < 0,08%,
- la teneur en autres impuretés dans le produit fritté selon l'invention étant de préférence inférieure à 0,5%, de préférence à 0,3%, de préférence encore inférieure à 0,2%.

A des teneurs inférieures à 1,2% dans le produit fritté, en pourcentage en masse sur la base des oxydes, on considère que l'effet des impuretés ne modifie pas substantiellement le résultat obtenu. De préférence, la teneur totale en impuretés est inférieure à 1%, de préférence encore à 0,7%, de préférence à 0,5%, en pourcentages en masse sur la base des oxydes.

De préférence, on ajoute volontairement, c'est-à-dire systématiquement et méthodiquement, à l'étape a) un ou plusieurs des oxydes $Y_2O_3$, MgO, CaO, $CeO_2$, $V_2O_5$, $Nb_2O_5$, $Ta_2O_5$, et de leurs précurseurs dans des quantités garantissant que le produit fritté obtenu à l'étape e) est conforme à l'invention.

A l'étape b), le mélange préparé à l'étape a) peut être versé dans un moule, puis mis en forme, de manière à former une pièce crue.

De préférence, le moule est conformé de manière que le produit fritté obtenu se présente sous la forme d'un bloc présentant une masse supérieure à 5 Kg, de préférence à 10 Kg.

La mise en forme peut par exemple résulter d'un pressage isostatique, d'un coulage en barbotine, d'un pressage uniaxial, du coulage d'un gel, d'un vibro-coulage ou d'une combinaison de ces techniques.

A l'étape c), cette pièce crue est frittée.

Le frittage est de préférence effectué à une température comprise entre 1500 et 1700 °C, de préférence sous atmosphère oxydante, de préférence sous air et de préférence à pression atmosphérique. Il peut conduire à une dissociation partielle du zircon.

A l'issue du frittage, on obtient un produit fritté selon l'invention.

Avantageusement, le produit fritté présente une résistivité électrique mesurée à 1500°C à la fréquence de 100 Hz supérieure à 100 $\Omega$.cm, voire supérieure à 150 $\Omega$.cm lorsque le produit est élaboré à partir d'une charge de départ contenant entre 15 et 50% de zircon, qu'il comporte le stabilisant $Y_2O_3$, que le dopant utilisé est $Nb_2O_5$ et que le rapport molaire $Nb_2O_5/Y_2O_3$ est tel que

$$0,9 \leq Nb_2O_5 / Y_2O_3 \leq 1,2.$$

Le produit fritté peut même présenter une résistivité électrique mesurée à 1500°C à la fréquence de 100 Hz supérieure à 200 $\Omega$.cm, notamment lorsque le produit est élaboré à partir d'une charge de départ contenant entre 27 et 50% de zircon, qu'il comporte le stabilisant $Y_2O_3$, que le dopant utilisé est $Nb_2O_5$ et que le rapport molaire $Nb_2O_5/Y_2O_3$ est tel que

$$0,95 \leq Nb_2O_5 / Y_2O_3 \leq 1,2.$$

Le produit fritté présente également un indice de résistance à la corrosion Ic, par un verre pour fibres de renforcement (type verre E), à 1500°C, suivant le test défini ci- , dessous, supérieur ou égal à 60.

Dans un premier mode de réalisation particulier, l'invention concerne un produit fritté élaboré à partir d'une charge de départ comportant une teneur en zircon comprise entre 5 et 50%, en pourcentages massiques sur la base de la charge de départ sèche, le produit fritté présentant l'analyse chimique suivante, en pourcentages massiques sur la base des oxydes :

- $ZrO_2+HfO_2$ : 64 - 97 %
- $SiO_2$ : 1,7 - 17 %
- $TiO_2$ : 0,2 - 3 %
- $Al_2O_3$ : 0,2 - 2,5 %
- un stabilisant de la zircone choisi parmi $Y_2O_3$, MgO, CaO, $CeO_2$, et leurs mélanges en une quantité massique telle que :

  $Y_2O_3$ + MgO + CaO + $CeO_2$ : 0, 4 - 6 %

- un dopant choisi parmi $Nb_2O_5$, $Ta_2O_5$, $V_2O_5$, et les mélanges de ceux-ci en une quantité telle que le rapport molaire dopant/stabilisant soit compris entre 0,7 et 1,5 ;
- Autres oxydes : < 1,2 %.

Dans un deuxième mode de réalisation particulier, l'invention concerne un produit fritté élaboré à partir d'une charge de départ comportant une teneur en zircon comprise entre 5 et 50%, en pourcentages massiques sur la base de la charge de départ sèche, le produit fritté présentant l'analyse chimique suivante, en pourcentages massiques sur la base des oxydes :

- $ZrO_2 + HfO_2$ : 74 - 96 %
- $SiO_2$ : 1,7 - 17 %
- $TiO_2$ : 0,4 - 1,5 %
- $Al_2O_3$ : 0,5 - 1,5 %
- un stabilisant de la zircone choisi parmi $Y_2O_3$, MgO, CaO, $CeO_2$, et leurs mélanges en une quantité massique telle que :

$$Y_2O_3 + MgO + CaO + CeO_2 : 0, 7 - 2,2 \%$$

- un dopant choisi parmi $Nb_2O_5$, $Ta_2O_5$, $V_2O_5$, et les mélanges de ceux-ci en une quantité telle que le rapport molaire dopant/stabilisant soit compris entre 0,7 et 1,2 ;
- Autres oxydes : < 1,2 %.

Dans un troisième mode de réalisation particulier, l'invention concerne un produit fritté élaboré à partir d'une charge de départ comportant une teneur en zircon supérieure ou égale à 15%, en pourcentage massique sur la base de la charge de départ sèche, le produit fritté présentant l'analyse chimique suivante, en pourcentages massiques sur la base des oxydes :

- $ZrO_2 + HfO_2$ : 74 - 92 %
- $SiO_2$ : 5 - 17 %
- $TiO_2$ : 0,4 - 1,5 %
- $Al_2O_3$ : 0,5 - 1,5 %
- un stabilisant de la zircone choisi parmi $Y_2O_3$, MgO, CaO, $CeO_2$, et leurs mélanges en une quantité massique telle que :

$$Y_2O_3 + MgO + CaO + CeO_2 : 0,7 - 2,2 \%$$

- un dopant choisi parmi $Nb_2O_5$, $Ta_2O_5$, $V_2O_5$, et les mélanges de ceux-ci en une quantité telle que le rapport molaire D/S dopant/stabilisant soit compris entre 0,9 et 1,2 ;
- Autres oxydes : < 1,2 %

Enfin, dans un quatrième mode de réalisation particulier, préféré entre tous, l'invention concerne un produit fritté élaboré à partir d'une charge de départ comportant une teneur en zircon supérieure ou égale à 27%, en pourcentage massique sur la base de la charge de départ sèche, le produit fritté présentant l'analyse chimique suivante, en pourcentages massiques sur la base des oxydes :

- $ZrO_2 + HfO_2$ 74 - 88 %
- $SiO_2$ . 9 - 17 %
- $TiO_2$ : 0,4 - 1,5 %
- $Al_2O_3$ : 0,5 - 1,5 %
- un stabilisant de la zircone choisi parmi $Y_2O_3$, MgO, CaO, $CeO_2$, et leurs mélanges en une quantité massique telle que :

$$Y_2O_3 + MgO + CaO + CeO_2 : 0, 7 - 2,2 \%$$

- un dopant choisi parmi $Nb_2O_5$, $Ta_2O_5$, $V_2O_5$, et les mélanges de ceux-ci en une quantité telle que le rapport molaire D/S dopant/stabilisant soit compris entre 0,95 et 1,2 ;
- Autres oxydes : < 1,2 %

Les exemples non limitatifs suivants sont donnés dans le but d'illustrer l'invention.

Dans ces exemples, les matières premières employées suivantes ont été choisies, les pourcentages donnés étant des pourcentages massiques :

- Un zircon micronisé présentant l'analyse chimique moyenne suivante (en poids) : $ZrO_2$+$HfO_2$ : 66%, $SiO_2$ : 33%, $Al_2O_3$ : 0,3%, $P_2O_5$ : 0,3%, $Fe_2O_3$ : 0,07%, $TiO_2$ : 0,08%, et moins de 0,2 % d'autres composés tels que $Y_2O_3$. Les particules ont une taille médiane (D50) de 2,5 $\mu$m.
- De la zircone, commercialisée par la Société Européenne des Produits Réfractaires sous le nom de CS10 dont la taille médiane (D50) des particules est de 3,5 $\mu$m, et dont l'analyse chimique moyenne (en poids) est : $SiO_2$ : 0,08%, $Al_2O_3$ : 0,08%, $Na_2O$ : 0,02%, $Fie_2O_3$: 0,018%, $TiO_2$ : 0,06%, CaO : 0,02%, MgO: 0,01%, le complément à 100% étant $ZrO_2$.
- De l'oxyde d'yttrium contenant plus de 99,9% de $Y_2O_3$, dont la taille des particules est inférieure à 44$\mu$m et dont la taille médiane (D50) des particules est de 3,1 $\mu$m. Optionnellement $Y_2O_3$ peut être introduit sous la forme d'une zircone partiellement stabilisée.
- De l'oxyde de titane contenant environ 95% de $TiO_2$ et dont la taille médiane des particules est de 2,3 $\mu$m.
- De l'alumine dont la taille médiane des particules est de 3 $\mu$m environ.
- De l'oxyde de niobium contenant environ 99,5% de $Nb_2O_5$ et dont la taille médiane des particules est de 1,5 $\mu$m.
- De l'oxyde de tantale contenant environ 99,85% de $Ta_2O_5$ et dont la taille des particules est inférieure 44 $\mu$m.

La silice présente dans le produit final fritté provient du zircon et de sa dissociation. Optionnellement, un ajout de silice sous forme de fumées ou de verre peut être pratiqué.

Des blocs réfractaires frittés ont été fabriqués selon un procédé comportant classiquement les étapes suivantes :

a) mélange des matières premières pour former la charge de départ,
b) mise en forme d'une pièce crue à partir dudit mélange,
c) frittage de ladite pièce crue.

A l'étape a), toutes les matières premières ont été dosées pour que le mélange ait la composition chimique pondérale moyenne désirée, puis mélangées en présence d'agents de frittage, de défloculants et/ou liants utilisés classiquement, par exemple de l'acide phosphorique.

Le mélange des matières premières pourrait éventuellement être atomisé avant de passer à l'étape a).

A l'étape b), le mélange a ensuite été mis en forme par pressage isostatique afin de former des pièces crues cylindriques de 200 mm de diamètre et d'environ 200 mm de hauteur.

A l'étape c), les pièces crues ont alors été frittées sous air, à pression atmosphérique et à une température de frittage de 1600°C avec 20h de maintien en palier.

Sur les différents exemples de blocs ainsi réalisés, des barreaux cylindriques de produit de 30 mm de diamètre et de 30 mm de hauteur ont été prélevés et soumis à une différence de potentiel de 1 volt à une fréquence de 100 Hertz à 1500 °C pour réaliser des mesures de résistivité électrique, notée « R » dans le tableau 1 ci-dessous, en $\Omega$.cm.

Pour mesurer la résistance à la corrosion, des échantillons sous la forme de barreaux cylindriques de produit de 22 mm de diamètre et de 100 mm de hauteur ont été prélevés et soumis à un test consistant à faire tourner les échantillons immergés dans un bain de verre E pour fibres de renforcement en fusion, porté à 1500°C. La vitesse de rotation des échantillons était de 6 tours par minute. Le test durait 48 heures. A la fin de cette période, on a évalué le volume restant de l'échantillon corrodé pour chaque échantillon. Le volume restant d'un échantillon corrodé du produit de référence (exemple 1) est choisi comme base de comparaison. Le rapport du volume restant de tout autre échantillon corrodé au volume restant de l'échantillon de référence corrodé, multiplié par 100, donne une évaluation de la résistance à la corrosion de l'échantillon testé par rapport à celle du produit de référence. « Ic » désigne l'indice de corrosion, ainsi défini, dans le tableau 1 suivant ainsi que dans les revendications.

Ainsi, les évaluations supérieures à 100 représentent une moindre perte par corrosion que celle du produit de référence. Les produits en question présentent donc une meilleure résistance à la corrosion par le verre fondu que l'échantillon de référence. Les évaluations inférieures à 100 représentent une perte par corrosion plus importante que celle du produit de référence. Les produits en question présentent donc une résistance à la corrosion par le verre fondu plus faible que l'échantillon de référence. On considère ici que la résistance à la corrosion est acceptable lorsque l'indice de corrosion Ic est supérieur ou égal à 60 (sur la base de l'exemple 1), de préférence supérieur à 70.

L'exemple 1, produit multiphasé de référence, est le produit ZS90 commercialisé par la Société Européenne des Produits Réfractaires (SEPR).

L'analyse chimique moyenne des différents produits testés et les résultats des tests sont donnés dans le tableau 1 (pourcentages massiques sur la base des oxydes). La teneur en impuretés telles que $P_2O_5$ ou $Fe_2O_3$ n'apparaît pas dans le tableau. La teneur totale en impuretés est cependant toujours inférieure à 0,6 %.

Tableau 1

EP 2 094 620 B1

| n° | % zircon dans la charge de départ | % $ZrO_2+HfO_2$ | % $SiO_2$ | % $Al_2O_3$ | % $TiO_2$ | % $Y_2O_3$ | % $Nb_2O_5$ | % $Ta_2O_5$ | %mol $Y_2O_3$ | %mol $Nb_2O_5$ | %mol $Ta_2O_5$ | $Nb_2O_5$ $Y_2O_3$ (rapport molaire) | $Ta_2O_5/Y_2O_3$ (rapport molaire) | R (ohm.cm) | Ic |
|---|---|---|---|---|---|---|---|---|---|---|---|---|---|---|---|
| 1 (**) | 15,9 | 90,88 | 5,4 | 0,81 | 0,64 | 2,1 | - | - | 1,22 | 0 | - | 0 | - | 25 | 100 |
| 2 | 6,4 | 84,26 | 2,21 | 0,78 | 0,63 | 6 | 6 | - | 3,54 | 3,01 | - | 0,85 | - | 110 | |
| 24(*) | 12 | 83,07 | 4,09 | 0,69 | 0,73 | 10 | 2 | - | 6,01 | 1,02 | - | 0,17 | - | 20 | |
| 3(*) | 15,9 | 90,48 | 5,4 | 0,81 | 0,64 | 2,1 | 0,4 | - | 1,22 | 0,2 | - | 0,16 | - | 31 | |
| 4(*) | 15,8 | 90,32 | 5,37 | 0,81 | 0.64 | 2,1 | 0,6 | - | 1,22 | 0,3 | - | 0,25 | - | 36 | |
| 5(*) | 15,8 | 90,12 | 5,37 | 0,81 | 0,64 | 2,1 | 0,8 | - | 1,22 | 0,39 | - | 0,32 | - | 42 | |
| 6(*) | 15,8 | 89,92 | 5,37 | 0,81 | 0,64 | 2,1 | 1 | - | 1,22 | 0,49 | - | 0,4 | - | 43 | |
| 7 | 15,6 | 88.99 | 5.3 | 0.8 | 0.64 | 2.1 | 2 | - | 1.23 | 0.99 | - | 0,8 | - | 115 | |
| 8 | 15 | 89,1 | 5,1 | 0,7 | 0, 74 | 2 | 2,2 | - | 1,17 | 1,09 | - | 0,93 | - | 156 | 86 |
| 9 | 15 | 87,5 | 5,1 | 0,7 | 0,73 | 2 | - | 3,8 | 1,19 | - | 1,15 | - | 0,97 | 160 | |
| 10(**) | 28,9 | 86,73 | 9,75 | 0,93 | 0,55 | 1,8 | - | - | 1,09 | 0 | - | 0 | - | 26 | |
| 11(*) | 27,8 | 86,01 | 9,38 | 0,92 | 0,55 | 1,8 | 1,1 | - | 1,09 | 0,57 | - | 0,52 | - | 58 | |
| 12 | 26,8 | 85,36 | 9,04 | 0, 92 | 0,55 | 1,8 | 2,1 | - | 1,09 | 1,09 | - | 1 | - | 210 | 79 |
| 25 | 28,64 | 83,75 | 9,69 | 0,75 | 2,95 | 1,22 | 1,44 | - | 0,6 | 0,61 | - | 1,02 | - | 250 | 75 |
| 26 | 29,04 | 83,95 | 9,79 | 2,45 | 0,76 | 1,22 | 1,44 | - | 0,6 | 0,61 | - | 1,02 | - | 280 | 74 |
| 27 | 30,36 | 84,82 | 10,24 | 0,75 | 0,76 | 1,22 | 2,02 | - | 0,61 | 0.86 | - | 1,41 | - | 610 | 65 |
| 28 | 30,22 | 84,73 | 10,19 | 0,75 . | 0,76 | 1,22 | 2,16 6 | - | 0,61 | 0,92 | - | 1,51 | - | 700 | 61 |
| 29 | 32,6 | 81,18 | 10,98 | 0,73 | 0,74 | 0,09 | 6 | - | 0,06 | 3,22 | - | 53,67 | - | 430 | 75 |
| 30 | 38,4 | 84,98 | 12,93 | 0,74 | 0,74 | 0,09 | 0,2 | - | 0,06 | 0,11 | - | 1,83 | - | 635 | 65 |
| 13(**) | 37,4 | 84,4 | 12,59 | 0,74 | 0,74 | 1,22 | - | - | 0,76 | 0 | - | 0 | - | 48 | 84 |
| 14(*) | 37,11 | 84,13 | 12,5 | 0,74 | 0,74 | 1,22 | 0,37 | - | 0,76 | 0,2 | - | 0,26 | - | 55 | |

(suite)

| n° | % zircon dans la charge de départ | % ZrO$_2$+HfO$_2$ | % SiO$_2$ | % Al$_2$O$_3$ | % TiO$_2$ | % Y$_2$O$_3$ | % Nb$_2$O$_5$ | % Ta$_2$O$_5$ | %mol Y$_2$O$_3$ | %mol Nb$_2$O$_5$ | %mol Ta$_2$O$_5$ | Nb$_2$O$_5$ Y$_2$O$_3$ (rapport molaire) | Ta$_2$O$_5$/Y$_2$O$_3$ (rapport molaire) | R (ohm.cm) | Ic |
|---|---|---|---|---|---|---|---|---|---|---|---|---|---|---|---|
| 1 5(*) | 36,75 | 83,9 | 12,38 | 0,74 | 0,74 | 1,22 | 0,73 | - | 0,76 | 0,39 | - | 0,51 | - | 67 | |
| 16 | 36,32 | 83,62 | 12,23 | 0,74 | 0,74 | 1,22 | 1,16 | - | 0,76 | 0,62 | - | 0,82 | - | 195 | |
| 17 | 35,94 | 83,47 | 12,1 | 0,74 | 0,74 | 1,22 | 1,44 | - | 0, 78 | 0,76 | - | 1 | - | 443 | 71 |
| 31 | 35,48 | 83,07 | 11,95 | 0,74 | 0,74 | 1,22 | 0,75 | 1,15 | 0,77 | 0,4 | 0,37 | 0,52 | 0,48 | 417 | 73 |
| 18 | 35,75 | 83,24 | 12,04 | 0,74 | 0,74 | 1,22 | 1,73 | - | 0,76 | 0,92 | - | 1,21 | - | 520 | 66 |
| 19(**) | 47,38 | 80,99 | 15,93 | 0,76 | 0,74 | 1,22 | - | - | 0,79 | 0 | - | 0 | - | 70 | 79 |
| 20(*) | 46,73 | 80,46 | 15,71 | 0,76 | 0,74 | 1,22 | 0,75 | - | 0,79 | 0,41 | - | 0,52 | - | 90 | |
| 21 | 45,94 | 80,05 | 15,45 | 0,75 | 0,74 | 1,22 | 1,44 | - | 0, 79 | 0,79 | - | 1 | - | 645 | |
| 22 | 48,5 | 80,33 | 16,31 | 0,86 | 0,65 | 0,7 | 0,8 | - | 0,46 | 0,44 | - | 0,96 | - | 750 | 66 |
| 23 | 48,5 | 80,33 | 16,31 | 0,86 | 0,65 | 0,5 | - | 1 | 0,33 | - | 0,33 | - | 1 | 750 | 66 |

(**) : exemples hors invention Les exemples selon invention sans le signe (*) sont les exemples préférés.

Les exemples 1, 10, 13, et 19, sont représentatifs de l'état de la technique dans lequel les produits multiphasés zircon/zircone étaient mal adaptés à des utilisations où une forte résistivité et une bonne résistance à la corrosion étaient simultanément requis.

Le tableau 1 permet de constater, de manière surprenante, qu'à teneur en zircon dans la charge de départ sensiblement constante, les produits selon l'invention présentent une résistivité électrique améliorée (exemples 1 et 3 à 9, 10 à 12, 13 à 18, 19 à 23) et une résistance à la corrosion acceptable, l'indice lc restant supérieur ou égal à 60, de préférence supérieur ou égal à 70. De façon surprenante, les inventeurs ont également constaté que le rapport molaire dopant/stabilisant influence la résistivité électrique mesurée à 1500°C. En outre, ils ont observé que pour un même rapport dopant / stabilisant, un premier produit présentant une teneur en zircon dans la charge de départ supérieure à un deuxième produit présente une résistivité électrique mesurée à 1500°C supérieure à ce dernier (exemples 11, 15, 20 ; exemples 12, 17, 21). Autrement dit, la résistivité électrique à 1500°C peut être augmentée en agissant *simultanément* sur trois facteurs : l'ajout de dopant, la modification du rapport dopant/stabilisant, et la quantité de zircon dans la charge de départ.

Cependant, les inventeurs ont également constaté qu'à teneur en zircon dans la charge de départ sensiblement constante, l'ajout de dopant diminue de façon significative et surprenante la résistance à la corrosion des produits (exemples 1 et 8 ; exemples 13, 17 et 18 ; exemples 19 et 22).

Selon l'invention, un compromis optimal est obtenu avec le produit 17, préféré d'entre tous.

Bien entendu, la présente invention n'est pas limitée aux modes de réalisation décrits et représentés fournis à titre d'exemples illustratifs et non limitatifs.

L'utilisation des produits de l'invention n'est pas limitée à une application en four de verrerie. Ces produits pourront notamment avantageusement être utilisés dans toute autre application nécessitant un produit réfractaire ayant une résistivité électrique élevée. En particulier, ils peuvent être utiles pour la construction des cuves d'électrolyse de l'aluminium.

Comme représenté sur la figure 1, de l'aluminium métal 2 peut être produit industriellement par électrolyse d'alumine en solution dans un bain 10 à base de cryolithe fondue. Le bain d'électrolyte 10 est classiquement contenu dans une cuve d'électrolyse 12. La cuve 12 comporte une paroi latérale 14 et un fond 16. Le fond 16 est composé de blocs de fond 17 réfractaires et de blocs cathodiques 24 et, en partie basse, de blocs isolants. La paroi latérale 14 est formée au moyen de blocs réfractaires de côté 18, ceinturés d'une enveloppe métallique 20, ou « casing », plus ou moins isolée.

La cuve 12 comporte au moins une anode 22 et au moins une cathode 24. Les anode 22 et cathode 24 sont disposées de manière à être en contact avec le bain d'électrolyte 10, la cathode 24 étant classiquement disposée à proximité du fond 16.

Le passage du courant électrique, de forte intensité, au travers du bain 10 produit par effet Joule un dégagement de chaleur. L'évacuation de cette chaleur à travers la paroi 14 de la cuve 12 entraîne le dépôt d'une couche 27 de cryolithe solidifiée sur la surface intérieure 28 des blocs 18.

Les blocs sont utilisés à des températures inférieures ou égales à 950°C.

La résistivité électrique à 950°C de l'exemple 17 de l'invention a donc été comparée à celle d'un bloc de référence à base de carbure de silicium (SiC) lié par une matrice de nitrure de silicium ($Si_3N_4$), selon le même protocole que précédemment, mais à une température de 950°C.

La résistivité électrique à 950°C de l'exemple 17 est de 49 000 $\Omega$.cm alors que celle du bloc de référence est de 6 000 $\Omega$.cm.

Le niveau de résistance à la corrosion par la cryolithe a été évalué en maintenant, pendant 22 heures à 1030°C dans un bain de cryolithe fondue, des échantillons, de section 25mmx25mm, de l'exemple 17 et du bloc de référence. L'échantillon de l'exemple 17 présente un volume corrodé (diminution du volume résultant de la corrosion) deux fois moins important que celui du bloc de référence.

Les produits réfractaires selon l'invention sont donc parfaitement adaptés à une utilisation dans une cuve d'électrolyse, notamment de l'aluminium, en particulier comme élément d'une paroi latérale d'une telle cuve et/ou dans une zone où ils peuvent entrer en contact avec de la cryolithe fondue.

**Revendications**

1. Produit fritté

   - élaboré à partir d'une charge de départ contenant un dopant choisi dans le groupe formé par $V_2O_5$, $Nb_2O_5$, $Ta_2O_5$, leurs précurseurs et les mélanges de ces dopants et/ou de leurs précurseurs, et 5 à 50% de zircon, en pourcentage massique sur la base de la masse de la charge de départ sèche, et
   - présentant la composition chimique moyenne suivante, en pourcentages massiques sur la base des oxydes et pour un total de 100% :

- de la silice $SiO_2$ et de la zircone, la teneur en zircone $ZrO_2$ étant au moins égale à 64%,
- au moins 0,2% d'un dopant choisi parmi $V_2O_5$, $Nb_2O_5$, $Ta_2O_5$, et leurs mélanges,
- optionnellement un stabilisant choisi parmi $Y_2O_3$, MgO, CaO, $CeO_2$, et leurs mélanges, à une teneur inférieure ou égale à 6%
- des « autres oxydes » à une teneur inférieure ou égale à 6,7 %.

**2.** Produit fritté selon la revendication 1, comportant au moins 0,4% dudit stabilisant, le rapport molaire D/S entre la teneur totale D en dopant et la teneur totale S en stabilisant étant tel que $0,7 \leq D/S \leq 2$.

**3.** Produit fritté selon la revendication précédente, dans lequel $0,7 \leq D/S$ et/ou $D/S \leq 1,5$.

**4.** Produit fritté selon la revendication précédente, dans lequel $0,81 \leq D/S$ et/ou $D/S \leq 1,2$.

**5.** Produit fritté selon la revendication précédente, dans lequel $0,9 \leq D/S$ et/ou $D/S \leq 1,1$.

**6.** Produit fritté selon l'une quelconque des revendications précédentes, dans lequel la teneur totale en dopant ($V_2O_5$ + $Nb_2O_5$ + $Ta_2O_5$) est supérieure ou égale à 0,4%, et/ou inférieure ou égale à 6%, en pourcentages en masse sur la base des oxydes.

**7.** Produit fritté selon la revendication précédente; dans lequel la teneur totale en dopant ($V_2O_5$ + $Nb_2O_5$ + $Ta_2O_5$) est supérieure ou égale à 1%, et/ou inférieure ou égale à 2,2%, en pourcentages en masse sur la base des oxydes.

**8.** Produit fritté selon l'une quelconque des revendications précédentes, dans lequel le dopant est $Nb_2O_5$.

**9.** Produit fritté selon l'une quelconque des revendications précédentes dans lequel la teneur totale en zircone et silice est supérieure à 90%, en pourcentage en masse sur la base des oxydes.

**10.** Produit fritté selon l'une quelconque des revendications précédentes dans lequel la teneur totale en zircone représente au moins 67% et/ou moins de 90%, en pourcentages massiques sur la base des oxydes.

**11.** Produit fritté selon l'une quelconque des revendications précédentes, dans lequel la teneur totale en zircone représente au moins 75% et/ou moins de 85%, en pourcentages massiques sur la base des oxydes.

**12.** Produit fritté selon l'une quelconque des revendications précédentes comportant au moins un promoteur de frittage choisi dans le groupe formé par $Al_2O_3$, $TiO_2$, $Cu_2O$, CuO, BeO, NiO, ZnO, $MnO_2$, $Co_2O_3$ et leurs mélanges.

**13.** Produit fritté selon l'une quelconque des revendications précédentes, fabriqué suivant un procédé de fabrication comportant les étapes suivantes :

a) mélange de matières premières pour former une charge de départ,
b) mise en forme d'une pièce crue à partir de ladite charge de départ,
c) frittage de ladite pièce crue de manière à obtenir ledit produit fritté, procédé dans lequel dans lequel la teneur en zircon dans ladite charge de départ est inférieure ou égale à 40%, et/ou supérieure ou égale à 34 %, en pourcentages massiques sur la base de la charge de départ sèche.

**14.** Produit fritté selon la revendication précédente, dans lequel la charge de départ comporte au moins 50% de zircone ajoutée au zircon, stabilisée ou non, en pourcentages massiques sur la base de la charge de départ sèche.

**15.** Produit fritté selon l'une quelconque des revendications 13 à 14, dans lequel les poudres formant lesdites matières premières présentent une taille médiane inférieure à 50 $\mu$m.

**16.** Cuve d'électrolyse comprenant une pluralité de blocs réfractaires, dans laquelle au moins un desdits blocs est un produit fritté selon l'une quelconque des revendications précédentes.

**17.** Cuve selon la revendication précédente, ledit produit fritté étant disposé de manière à pouvoir entrer en contact avec de la cryolithe fondue.

**18.** Utilisation d'un produit réfractaire selon l'une quelconque des revendications 1 à 15, dans un four de verrerie, en particulier comme « bloc porte-électrode ».

**Claims**

**1.** A sintered product:

- made from a starting batch containing a dopant selected from the group comprising $V_2O_5$, $Nb_2O_5$, $Ta_2O_5$, precursors thereof and mixtures of such dopants and/or precursors thereof, and 5 to 50% zircon, in percentage by weight on the basis of the dry starting batch weight, and
- having the following average chemical composition, in percentages by weight on the basis of the oxides and for a total of 100%,
- silica $SiO_2$ and zirconia, the content of zirconia $ZrO_2$ being at least 64%,
- at least 0.2% of a dopant selected from $V_2O_5$, $Nb_2O_5$, $Ta_2O_5$, and mixtures thereof,
- optionally, a stabilizer selected from $Y_2O_3$, MgO, CaO, $CeO_2$, and mixtures thereof at a content of 6% or less,
- "other oxides" at a content of 6.7% or less.

**2.** A sintered product according to claim 1, compricing at least 0.4% of said stabilizer, wherein the molar ratio D/S of the total dopant content D to the total stabilizer content S is such that $0.7 \leq D/S \leq 2$.

**3.** A sintered product according to the preceding claim, in which $0.7 \leq D/S$ and/or $D/S \leq 1.5$.

**4.** A sintered product according to the preceding claim, wherein $0.81 \leq D/S$ and/or $D/S \leq 1.2$.

**5.** A sintered product according to the preceding claim, wherein $0.9 \leq D/S$ and/or $D/S \leq 1.1$.

**6.** A sintered product according to any of the preceding claims, wherein the total dopant content ($V_2O_5$ + $Nb_2O_5$ + $Ta_2O_5$) is 0.4% or more and/or 6% or less, in percentages by weight on the basis of the oxides.

**7.** A sintered product according to the preceding claim, wherein the total dopant content ($V_2O_5$ + $Nb_2O_5$ + $Ta_2O_5$) is 1% or more and/or 2.2% or less, in percentages by weight on the basis of the oxides.

**8.** A sintered product according to any of the preceding claims, wherein the dopant is $Nb_2O_5$.

**9.** A sintered product according to any of the preceding claims, wherein the total content of zirconia and silica is greater than 90%, in percentage by weight on the basis of the oxides.

**10.** A sintered product according to any of the preceding claims, wherein the total content of zirconia is at least 67% and/or less than 90%, in percentages by weight on the basis of the oxides.

**11.** A sintered product according to the preceding claim, wherein the total content of zirconia is at least 75% and/or less thaw 85%, in percentages by weight on the basis of the oxides.

**12.** A sintered product according to any of the preceding claims, including at least one sintering promoter selected the group comprising $Al_2O_3$, $TiO_2$, $Cu_2O$, CuO, BeO, NiO, ZnO, $MnO_2$, $Co_2O_3$, and mixtures thereof.

**13.** A sintered product according to any of the preceding claims manufactured according to a manufacturing process, comprising the following steps:

a) preparation of a mixture a of raw materials for forming a starting batch,
b) formation of a green part from said starting batch,
c) sintering of said green part so as to obtain said sintered product,

wherein the zircon content in said starting batch is 40% or less, and/or 34% or more, in percentages by weight on the basis of the dry starting batch.

**14.** A sintered product according to the preceding claim, wherein the starting batch contains at least 50% zirconia added to zircon, whether stabilized or not, in weight percentages on the basis of the dry starting batch.

**15.** A sintered product according to any of claims 13 to 14, to 14, wherein the powders forming said raw materials have a median size of less then 50 $\mu$m.

**16.** An electrolysis cell, comprising a plurality of refractory blocks, wherein at least one of said blocks is a sintered product according to any of the previous claims.

**17.** A cell according to the preceding claim, wherein said sintered product is disposed so as to be able to be in contact with molten cryolite.

**18.** Use of a refractory product according to any of claims 1 to 15, in a glassmaking furnace, in particular as an "electrode-supporting - block".

**Patentansprüche**

**1.** Gesintertes Produkt

- hergestellt ausgehend von einer Startcharge, die ein Dotierungsmittel enthält, das aus einer Gruppe ausgewählt wird, die durch $V_2O_5$, $Nb_2O_5$, $Ta_2O_5$ gebildet ist, deren Vorläufern und aus Mischungen dieser Dotierungsmittel und/oder und ihren Vorläufern, und 5 bis 50% Zirkon in Massenprozenten auf der Basis der Masse der trockenen Startcharge und
- aufweisend die folgende mittlere chemische Zusammensetzung, in Massenprozent auf der Basis von Oxiden und einer Gesamtheit von 100%,
- Siliciumdioxyd $SiO_2$ und Zirkonium, wobei der Anteil an Zirkonium $ZrO_2$ mindestens gleich 64% ist,
- mindestens 0,2% eines Dotierungsmittels ausgewählt aus $V_2O_5$, $Nb_2O_5$, $Ta_2O_5$ und deren Mischungen,
- opitional einen Stabilisator ausgewählt aus $Y_2O_3$, MgO, CaO, $CeO_2$ und deren Mischungen mit einem Anteil von weniger oder gleich 6%,
- "anderen Oxiden" mit einem Anteil von weniger oder gleich 6,7%.

**2.** Gesintertes Produkt nach Anspruch 1, welches mindestens 0,4% besagten Stabilisators beinhaltet, wobei das molare Verhältnis D/S zwischen dem Gesamtanteil D an Dotierungsmittel und dem gesamten Anteil S an Stabilisator derart ist, dass $0{,}7 \leq D/S \leq 2$.

**3.** Gesintertes Produkt nach dem vorhergehenden Anspruch, in welchem $0.7 \leq D/S$ und/oder $D/S < 1{,}5$ ist.

**4.** Gesintertes Produkt nach dem vorhergehenden Anspruch, in welchem $0{,}81 \leq D/S$ und/oder $DIS \leq 1{,}2$ ist.

**5.** Gesintertes Produkt nach dem vorhergehden Anspruch, in welchem $0{,}9 \leq D/S$ und/oder $D/S \leq 1{,}1$ ist.

**6.** Gesintertes Produkt nach einem der vorhergehenden Anspruche, in welchem der Gesamtanteil an Dotierungsmittel ($V_2O_5 + Nb_2O_5 + Ta_2O_5$) größer oder bleich 0,4% ist und/oder kleiner oder gleich 6%, in Massenprozenten auf der Basis von Oxiden.

**7.** Gesintertes Produkt nach dem vorhergehenden Anspruch, in welchem der Gesamtanteil an Dotierungsmittel ($V_2O_5 + Nb_2O_5 + Ta_2O_5$) größer oder gleich 1% ist, und/oder kleiner oder gleich 2,2%, in Massenprozenten auf der Basis von Oxiden.

**8.** Gesintertes Produkt nach einem der vorhergehenden Ansprüche, in dem als Dotierungsmittel $Nb_2O_5$ vorgesehen ist.

**9.** Gesintertes Produkt nach einem der vorhergehenden Ansprüche, in welchem der Gesamtanteil an Zirkonium und Siliciumdioxyd größer als 90% ist, in Massenprozenten auf der Basis von Oxiden.

**10.** Gesintertes Produkt nach einem der vorhergehenden Ansprüche, in welchem der Gesamtanteil an Zirkonium mindestens 67% und/oder mindestens 90% beträgt, in Massenprozenten auf der Basis von Oxiden.

**11.** Gesintertes Produkt nach einem der vorhergehenden Ansprüche, in welchem der Gesamtanteil an Zirkonium mindestens 75% beträgt und/oder mindestens 85%, in Massenprozenten auf der Basis von Oxiden.

12. Gesintertes Produkt nach einem der vorhergehenden Ansprüche, welches mindestens einen Sinter- Promotor aufweist, welcher aus der Gruppe ausgewählt ist, die durch $Al_2O_3$, $TiO_2$, $Cu_2O$, $CuO$, $BeO$, $NiO$, $ZnO$, $MnO_2$, $Co_2O_3$ und deren Mischungen gebildet ist.

13. Gesintertes Produkt nach einem der vorhergehenden Ansprüche, welches einem Fabrikationsprozess folgend hergestellt wird, welcher folgende Schritte aufweist:

a) Mischung von ersten Materialien, um eine Startcharge zu bilden,
b) Bildung eines Rohteiles aus besagter Startcharge,
c) Sinterung des Rohteils, derart, dass das besagte gesinterte Produkt erhalten wird,

ein Verfahren, in welchem der Zirkonanteil in besagter Startcharge kleiner oder gleich 40% ist, und/oder größer oder gleich 34%, in Massenprozenten auf der Basis der trockenen Startcharge.

14. Gesintertes Produkt nach dem vorhergehenden Anspruch, in welchem die Startcharge mindestens 50% Zirkonium aufweist, welches zum Zirkon zugegeben wird, stabilisiert oder nicht, in Massenprozenten auf der Basis der trockenen Startcharge.

15. Gesintertes Produkt nach einem der Ansprüche 13 bis 14, in welchem die Pulver, die die ersten Materialien bilden, eine mittlere Größe aufweisen, die kleiner als 50$\mu$m ist.

16. Elektrolysetrog, welcher aus einer Vielzahl von feuerfesten Blocks besteht, in welchem mindestens einer dieser Blocks ein gesintertes Produkt nach einem der vorhergehenden Ansprüche ist.

17. Trog nach dem vorhergehenden Anspruch, wobei das gesinterte Produkt derart angeordnet ist, dass es in Kontakt mit dem geschmolzenen Cryolithen gelangt.

18. Verwendung eines feuerfesten Produkts nach einem der sprüche 1 bis 15 in einem Glasherstellungsofen, insbesondere als "Elektrodenträgerblock".

Fig. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3899341 A
- US 4507394 A
- US 5124287 A
- WO 2006073841 A
- US 6121177 A
- EP 0199459 A